# EUROPÄISCHE PATENTSCHRIFT

(11) **EP 3 285 628 B1**
(45) Veröffentlichungstag und Bekanntmachung des Hinweises auf die Patenterteilung: **17.02.2021**
(21) Anmeldenummer: 16718298.9
(22) Anmeldetag: 18.04.2016
(51) Int. Cl.: A47J 43/08, A47J 43/07, A47J 43/06, A47J 43/044

(54) **ARBEITSGERÄT MIT TELESKOPARTIG BEWEGLICHEM SCHAFT ZUM RÜHREN ODER ZERKLEINERN VON NAHRUNGSMITTELN**
IMPLEMENT WITH TELESCOPICALLY MOVABLE FUNNEL FOR STIRRING OR CHOPPING FOODSTUFFS
UNITÉ DE TRAVAIL POURVUE D'UNE TIGE MOBILE DE FAÇON TÉLESCOPIQUE POUR AGITER OU BROYER DES ALIMENTS

(30) Priorität: 21.04.2015 DE 102015207196
(43) Veröffentlichungstag der Anmeldung: 28.02.2018
(73) Patentinhaber: De'Longhi Braun Household GmbH, 63263 Neu-Isenburg (DE)
(72) Erfinder: WOLF, Jürgen, 65830 Kriftel (DE); STENGLEIN, Christian, 60438 Frankfurt am Main (DE); BUHL-REMMEL, Sabine, 65824 Schwalbach am Taunus (DE); DEXHEIMER, Christian, 63225 Langen (DE); KLEEMANN, Christof, 61350 Bad Homburg (DE)
(74) Vertreter: Hoffmann Eitle
(86) Internationale Anmeldenummer: PCT/EP2016/058528
(87) Internationale Veröffentlichungsnummer: WO 2016/169883

(56) Entgegenhaltungen:
- DE-A1- 19 750 813
- DE-A1- 19 750 813
- US-A- 1 412 401
- US-A- 1 412 401
- US-A- 5 863 118
- US-A- 5 863 118

## Beschreibung

Die vorliegende Erfindung betrifft ein Arbeitsgerät, insbesondere einen elektrisch angetriebenen Stabmixer, mit einem teleskopartig beweglichen Schaft zum Rühren oder Zerkleinern von Nahrungsmitteln nach dem Oberbegriff des Anspruchs 1.

### Stand der Technik

Herkömmliche Arbeitsgeräte zum Rühren oder Zerkleinern von Nahrungsmitteln sind beispielsweise aus der WO 96/10944 A1 oder der EP 0 724 857 A1 bekannt. Solche Arbeitsgeräte werden in breiter Vielfalt, insbesondere bei der täglichen Zubereitung von Nahrungsmitteln, eingesetzt, um beispielsweise Nahrungsmittel zu zerkleinern und zu vermischen. Eine Art von Arbeitsgeräten sind Stabmixer, welche in Haushalten, aber auch in professionellen Gastronomiebetrieben weite Verbreitung gefunden haben. Typischerweise besitzen solche Stabmixer ein Motorgehäuse, an das sich ein langgestrecktes Gehäuseteil, der sogenannte Schaft, anschließt, welcher wiederum an seinem Ende in eine Abschirmung mit einem unten offenen Ende, die sogenannte Glocke, übergeht. In dem Motorgehäuse ist ein Antriebsmotor angeordnet, der eine durch den Schaft geführte Arbeitswelle antreibt, an deren Ende, im Bereich der Glocke, üblicherweise ein Arbeitsteil, zum Beispiel ein Schneidmesser in Form einer sich schnell drehenden Klinge befestigt ist, um Flüssigkeiten zu mixen und feste Speisen zu zerkleinern.

Der Schaft übernimmt in der Regel die Adaption des Motorgehäuses an die Schaftbaugruppe und häufig die axiale sowie radiale Lagerung der Welle, welche zum Antrieb des Messers benötigt wird. Die Glocke hat in erster Linie eine Schutzfunktion, um das Hineingreifen in die Klinge durch den Anwender zu erschweren. Außerdem dient sie der Definition eines festen Abstands zwischen der Klinge und dem Boden des Bearbeitungsgefäßes (Topf, Rührbecher, etc.), der Strömungsoptimierung um die Klinge herum sowie als Spritzschutz beim Eintauchen in Flüssigkeiten. Die Glocke ist dabei so dimensioniert, dass sie das Schneidmesser vollständig umschließt und, in Richtung der Achse der Arbeitswelle gesehen, eine bestimmte Strecke über das Ende der Welle bzw. das Schneidmesser vorsteht.

Bei diesen auf dem Markt verfügbaren Geräten sind die Klingen immer in einer definierten horizontalen Position innerhalb der Glocke angebracht. Die Klingen sind stets fest auf einer Welle montiert und meist starr radial und axial gelagert. Somit ergibt sich ein vom Messer erreichbarer Bearbeitungsraum, der räumlich begrenzt ist. Durch die "normale" Auf- und Ab-Bewegung des gesamten Stabmixers durch den Bediener wird dieser Raum nur unwesentlich größer. Spätestens beim Aufsetzen der Glocke auf den Bearbeitungsboden wird der Raum unterhalb des Messers nicht durch dieses erreicht. Die Zerkleinerung erfolgt dann in aller Regel nur noch durch Strömungseffekte. Vorausgesetzt es befindet sich genug Flüssigkeit um das Schneidgut, wird dieses mit der Strömung durch den Bearbeitungsraum gezogen und somit zerkleinert.

Außerdem kann sich bei den bekannten Stabmixern der Schaft im Betrieb immer wieder am Gefäßboden festsaugen, was für den Benutzer äußerst störend sein kann, da es einen erhöhten Kraftaufwand erfordert, um den Schaft wieder vom Boden zu lösen. Das ist hauptsächlich durch die Position des Schneidmessers innerhalb der Glocke bedingt, denn die für die Funktion sinnvolle Geometrie des Messers sorgt für einen "Propellereffekt" und bewirkt ein Ansaugen des gesamten Schafts am Bearbeitungsboden.

Um dieses Ansaugen zu vermeiden, hat die Anmelderin in der DE 197 50 813 C2 einen Stabmixer mit einer elastisch verformbaren Glocke vorgeschlagen. Wird der Stabmixer im Betrieb im Rührgefäß auf den Boden aufgesetzt, kann sich die Glocke durch vom Benutzer ausgeübten axialen Druck verformen und so das Schneidmesser näher an den Behälterboden bringen, es also axial gegenüber dem Glockenrand verschieben.

Einen weiteren Ansatz hatte die Anmelderin mit dem Stabmixer der DE 195 04 638 A1 vorgeschlagen, bei dem der beim Festsaugen auftretende Unterdruck durch ein in der Glocke angeordnetes Ventil als Strömungskanal beseitigt wird. In einer weiteren Ausführungsform erfolgt zur Freigabe eines zusätzlichen Strömungskanals eine drehzahlabhängige relative Verschiebung von Glocke und Arbeitsteil.

Die hierfür notwendigen Verstelleinrichtungen der Welle sind aber mechanisch äußerst aufwendig und daher sehr teuer. Zudem kann der Benutzer die Stellung der Klinge in Bezug auf die Glocke als Ganzes nicht selbst bestimmen, um einerseits die Klinge näher an große Nahrungsmittelstücke zu bringen, die ansonsten nicht ihr erfasst werden würden, und andererseits die Klinge im Bearbeitungsraum der Glocke axial frei zu verschieben. Denn es kommt es immer wieder vor, dass sich während des Betriebs ein größeres Stück des Schneidguts in den Bereich unter oder über dem Messer setzt und nicht durch die Schneiden der Klinge zerkleinert werden kann. Auch liegen die Nahrungsmittelstücke teilweise so flach auf dem Topfboden, dass das Messer sie nicht erreichen kann. Das verlängert zum einen die Bearbeitungszeit, zum anderen wird das Ergebnis qualitativ schlechter.

Aus der Schrift DE 698 26 868 T2 ist ein Stabmixer mit den Merkmalen des Oberbegriffs des Anspruchs 1 bekannt Weitere Stand der Technik Dokumente sind: US 5 863 118 und US 1 412 401.

### Darstellung der Erfindung

Es ist somit eine Aufgabe der Erfindung, dem Benutzer die Möglichkeit zu geben, während des Betriebs die horizontale (axiale) Position des Arbeitsteils aktiv zu verändern und somit den Bearbeitungsraum des Arbeitsteils zu erweitern. Diese Aufgabe wird durch ein Arbeitsgerät mit den Merkmalen des Anspruchs 1 gelöst. Bevorzugte Ausführungsformen sind in den Unteransprüchen definiert.

Gemäß der vorliegenden Erfindung umfasst ein Arbeitsgerät zum Rühren oder Zerkleinern von Nahrungsmitteln einen in einem Motorgehäuse angeordneten Antriebsmotor, einen Schaft, in welchem eine mit dem Antriebsmotor drehstarr verbindbare Welle gelagert ist und der in eine innere und äußere Baugruppe unterteilt ist, wobei die äußere Baugruppe am vom Motorgehäuse entfernten Ende eine Abschirmung aufweist, und ein von der Abschirmung umgebenes Arbeitsteil. Dabei wird die Welle in der inneren Baugruppe axial unbeweglich geführt und die innere Baugruppe ist gegenüber der äußeren Baugruppe axial beweglich. Das Arbeitsteil ist fest mit der Welle verbunden und axial unverschieblich in der inneren Baugruppe gelagert, so dass das Arbeitsteil in Bezug auf die Abschirmung beweglich ist.

Im Folgenden wird die vom Antriebsteil zum Motorgehäuse weisende Richtung auch als "oben" und die entgegengesetzte Richtung als "unten" bezeichnet.

Der erfindungsgemäße Schaft wird somit im Wesentlichen in zwei Teile bzw. zwei Baugruppen unterteilt, eine innere und eine äußere Baugruppe. Die innere Baugruppe dient als "feste" Schnittstelle zu dem bekannten Motorgehäuse und übernimmt weitere Funktionen, die nachfolgend beschrieben werden. Die äußere Baugruppe umfasst den Großteil der Außengeometrie, sowie die Abschirmung am unteren Ende, zum Beispiel in Form einer sogenannten Glocke. Auch diese Baugruppe erfüllt darüber hinaus noch weitere Funktionen. Dadurch, dass die äußere Baugruppe gegenüber der inneren Baugruppe axial beweglich ist, ist der Schaft teleskopartig aufgebaut, was auch das äußere Erscheinungsbild, beispielsweise im oberen Drittel der Außengeometrie prägen kann. Dieser teleskopartige Aufbau ermöglicht ein "Eintauchen" zumindest eines Teils der inneren Baugruppe in die äußere Baugruppe.

Das Arbeitsteil, das im Falle eines Stabmixers durch ein Messer dargestellt wird, ist wie üblich fest mit der Welle verbunden, welche die Rotation des Motors auf das Messer überträgt. Durch die axiale Führung innerhalb der inneren Baugruppe bleibt die Verbindung zwischen Welle und Motor über den gesamten Betrieb unverändert und es kann keine axiale Bewegung zwischen innerer Baugruppe und Welle stattfinden. Da sich jedoch die äußere Baugruppe relativ zu der inneren bewegen kann, wirkt diese Bewegung auch zwischen Glocke und Messer.

Im bisherigen Stand der Technik war die feste axiale Position des Arbeitsteils in Bezug zur Abschirmung bzw. dem unteren Ende des Schafts ein Kompromiss für eine möglichst ausgeglichene Leistung in flüssigen und festen Stoffen. Das hatte zur Folge, dass beide Zustände nicht mit maximal möglicher Leistung bearbeitet werden konnten sowie die bereits oben genannten Nachteile in Kauf genommen werden mussten. Mit dem erfindungsgemäßen Arbeitsgerät zum Rühren und Zerkleinern von Nahrungsmitteln lässt sich sowohl ein größerer Abstand des Arbeitsteils (z.B. des Messers) zum unteren Rand der Abschirmung (z.B. Glocke) realisieren, durch den in flüssigen Speisen der Ansaugeffekt und die Neigung zum Spritzen reduziert werden kann. Möchte der Benutzer indes die Schneidleistung bei festen Speisen erhöhen oder nicht bearbeitete Speiseteile erreichen, kann er wie gewohnt Druck auf das Arbeitsgerät ausüben. Im Gegensatz zum Stand der Technik schiebt sich aber dabei die innere Baugruppe in die äußere Baugruppe, so dass das Arbeitsteil, das axial unverschieblich in der inneren Baugruppe gelagert ist, gegenüber der Abschirmung weiter nach unten exponiert wird und so besser in die zu bearbeitenden Speisen eindringen kann und selbst dicht am Behälterboden anliegende Stücke erreichen und verarbeiten kann.

Darüber hinaus zeichnet sich das erfindungsgemäße Arbeitsgerät durch einen einfachen Aufbau, eine unkompliziertere Anwendung und leicht durchzuführende Reinigung aus.

Bevorzugt ist die Welle über ein Axiallager in der inneren Baugruppe gelagert, wobei die Kraftübertragung vom Axiallager auf die Welle über eine an der Welle angebrachte Sicherung erfolgt. Diese kann beispielsweise aus einer U-Scheibe und einer Rollung bestehen, die bevorzugt unterhalb des Axiallagers vorgesehen sind, aber auch um andere Arten der Sicherung, die dem Fachmann bekannt sind. Bei der Rollung handelt es sich um eine Methode zur Erzeugung eines Formschlusses auf der Ebene des Wellendurchmessers (analog zu einem Wellensicherungsring) . Dabei wird die Welle an einer Stelle durch eine parallel mitlaufende "spitze" Rolle eingeschnürt. Das vor und nach der Einschnürung verdrängte Material baut über den Wellendurchmesser auf und passt so nicht mehr durch die relativ eng anliegende U-Scheibe. Auf diese Weise wird auf einfach umsetzbare Weise sichergestellt, dass keine axiale Bewegung zwischen innerer Baugruppe und Welle möglich ist.

Weiterhin ist es von Vorteil, wenn die äußere Baugruppe an ihrem vom Motorgehäuse entfernten Ende ein radiales Gleitlager für die Welle aufweist. Ein solches Radiallager ist beispielsweise eine Gleitlagerbuchse (insbesondere aus Bronze), welche keinerlei axiale Funktion besitzt, also eine gleitende Lagerung in axialer Richtung bietet. So kann das Lager in unmittelbarer Nähe des Arbeitsteils, wo der Momenteintrag am höchsten ist, die Lagerkräfte am effektivsten aufnehmen.

Hierbei ist es von besonderem Vorteil, wenn das radiale Gleitlager in einer flexiblen Buchse gegenüber der äußeren Baugruppe abgestützt ist. Durch diese Flexibilität ist die Lagerbaugruppe, die die Welle im unteren Teil der äußeren Baugruppe radial fest und axial gleitend lagert, in der Lage, die in der Fertigung üblichen Toleranzen auszugleichen. Zudem reduziert diese "weiche Lagerung" die Geräuschentwicklung im Betrieb erheblich, da über diese Anbindung die Vibration nicht über "harte" Komponenten auf die äußere Baugruppe übertragen wird, welche dann geräuschverstärkende Wirkung hätten.

Gemäß der Erfindung ist zwischen der inneren und der äußeren Baugruppe ein elastisches Element vorgesehen ist, das die äußere Baugruppe gegenüber der inneren Baugruppe axial vorspannt. Auf diese Weise können die beiden Baugruppen in eine Vorzugslage zueinander gezwungen werden, bei der die innere Baugruppe aus der äußeren Baugruppe herausgeschoben wird, das Arbeitsteil also in seine am weitesten oben liegende Position in der Abschirmung verlagert wird. Diese Position ist von Vorteil beim Bearbeiten von Flüssigkeiten, da hierbei die Abschirmung relativ tief in die Flüssigkeit getaucht werden muss, um diese mit dem Arbeitsteil zu bearbeiten und daher die Abschirmung kein Herausspritzen zulässt.

An der äußeren Baugruppe können Längsführungen vorgesehen sein, welche mit entsprechenden an der inneren Baugruppe vorgesehenen Führungselementen zusammenwirken. Dabei laufen die Führungselemente in den Längsführungen. Diese Kombination von Längsführungen und Führungselementen stellen zum einen Endanschläge für den Hub dar, sind also für die Endposition der inneren Baugruppe in der, zum Beispiel durch das elastische Element aufgezwungenen, Vorzugslage sowie für das einmalige Hinterrasten bei der Montage der äußeren auf die innere Baugruppe zuständig und verhindern zum anderen das Verdrehen der inneren Baugruppe relativ zur äußeren Baugruppe, schützen also vor fehlerhaftem Gebrauch ("Misuse").

Dabei können bevorzugt die Längsführungen und Führungselemente jeweils paarweise gegenüberliegend vorgesehen sein, um die beiden genannten Funktionen auf verschiedene Paare von Längsführung und Führungselement aufzuteilen und so kräftemäßig zu optimieren.

In einer vorteilhaften Weiterbildung sind an der inneren Baugruppe Zentriermittel für die Welle vorgesehen. Die Zentriermittel haben dabei die Funktion, die Welle in der inneren Baugruppe in einem schmalen Intervall vorzuzentrieren, was sinnvoll ist, um das "Einfädeln" der Wellenkupplung am Motorgehäuse auf der des Schafts zu erleichtern.

Weiter ist es vorteilhaft, die Welle durch ein in der inneren Baugruppe befestigtes weiteres Sicherungselement axial zu fixieren. Diese Fixierung, welche vorzugsweise oberhalb des Axiallagers erfolgt, erlaubt eine zusätzliche Absicherung gegen eine ungewollte axiale Verschiebung der Welle in Bezug auf die innere Baugruppe. Hierzu können die oben genannten Zentrierelemente als Auflagefläche für das Sicherungselement dienen, was durch Funktionsintegration weniger Bauteile und somit eine einfachere Herstellung erlaubt.

In einer bevorzugten Ausführung der Erfindung ist die innere Baugruppe gegenüber der äußeren Baugruppe durch ein oder mehrere Gleitlager gelagert. Das Gleitlager kann dabei aus zwei Gleitlagerschalen bestehen, die jeweils aus unterschiedlichen Kunststoffen oder aus Kunststoff einerseits und Metall, insbesondere Edelstahl andererseits bestehen. Dies erlaubt eine reibungsarme und somit verschleißarme aber auch spielfreie Verschiebung der Baugruppen zueinander.

Darüber hinaus sind die bisher beschriebenen Ausführungsformen der Erfindung auf besonders vorteilhafte Weise mit einer Maßnahme kombinierbar, welche die Wirkung der Erfindung zusätzlich verbessert. Dabei umfasst bevorzugt das Arbeitsgerät ein am Arbeitsende der Welle befestigtes, sich radial erstreckendes Schneidmesser, welches eine an einer in Rotationsrichtung vorderen Seite liegende und im Umlauf eine kreisförmige Schneidzone definierende Schneidkante besitzt und eine Fräsrippe aufweist, die in einer axialen Richtung aus dem Messer emporsteht und so orientiert ist, dass sie im Umlauf eine Fräswirkung erzeugt und eine entsprechende Fräszone definiert, die sich von der Nabe bis zur Schneidzone des Messers erstreckt. Die Fräszone und die Schneidzone grenzen dabei unmittelbar aneinander an, so dass keine passiven Zonen dazwischen entstehen. Somit wird die durch den Umlauf der Schneidkante definierte Schneidzone nach innen zur Nabe hin durch eine Fräszone verlängert und dadurch insgesamt die aktive Zone der Zerkleinerung im Vergleich zu herkömmlichen Schneidmessern vergrößert. Grundidee dabei ist, dass sich die Schneidzone nur bis zu einem Punkt radial nach innen erstreckt, wo noch eine akzeptable Schnittgeschwindigkeit erreicht werden kann, und sich dann daran unmittelbar anschließend die durch die Fräsrippe definierte Fräszone erstreckt. Bevorzugt erstreckt sich die Fräszone bis zur Schneidzone des Messers, ohne diese wesentlich zu überlappen. Da eine scharfe Abgrenzung zwischen dem (radial inneren) Ende der Schneidzone und dem (radial äußeren) Ende der Fräszone aufgrund des strukturellen Übergangs von Schneidkante zu Fräsrippe nicht exakt möglich ist, ist unter "keiner Überlappung" der beiden Zonen zu verstehen, dass sich die von der noch unveränderten Schneidkante (vor dem Übergang) definierte Schneidzone und die von der noch unveränderten Fräskante (vor dem Übergang) definierte Fräszone nicht überlappen. Anders ausgedrückt geht die Fräszone in die Schneidzone in dem Sinne über, dass bei dem Übergang die Fräswirkung der Fräsrippe auf null abnimmt und die Schneidwirkung der Schneidkante von null ausgehend zunimmt.

Die in axialer Richtung aus dem Messer emporstehende Fräskante ist aufgrund ihrer Erstreckung nicht wie die abgekanteten Elemente im Stand der Technik im Wesentlichen entlang einer Tangente zur Drehrichtung des Schneidmessers orientiert, das heißt mit einer im Wesentlichen senkrecht zur Drehrichtung orientierten Schlagrichtung, sondern besitzt entlang ihrer Erstreckung zumindest bereichsweise Schlagrichtungen, die zur Drehrichtung einen spitzen Winkel von 45° oder weniger, bevorzugt 35° oder weniger bilden ("Schlagwinkel"). Unter Schlagrichtung wird auf dem Gebiet der Schneidklingen die Normale auf die Schlagkante bzw. Schlagfläche verstanden, das heißt diejenige Richtung, unter welcher die Schlagkante (Schneidkante) einer Klinge das zu schneidende Material trifft, beispielsweise beträgt der Winkel zwischen Schlagrichtung und Drehrichtung bei einer radial verlaufenden Kante 0°. Bei der Fräsrippe ist die Schlagfläche die in die Drehebene weisende Seitenfläche der Fräsrippe. Bevorzugt besitzt die Fräskante entlang ihrer gesamten Erstreckung einen Schlagwinkel von 45° oder weniger, besonders bevorzugt 35° oder weniger.

Als Schneidkante wird hier eine horizontal schneidend wirkende Kante des Messers verstanden, welche also in der Lage ist, Schnitte in der Rotationsebene zu bewirken. Die Schneidkante wird erzeugt, in dem das Klingenblech unter einem (Tiefzieh-)Winkel von beispielsweise 20° tiefgezogen und anschließend scharf geschliffen wird. Der Schliff erfolgt dabei in der Rotationsebene der Klinge, so dass der genannte Winkel somit den sogenannten Keilwinkel der Klinge, das heißt den Winkel zwischen der Rotationsebene und einer (oberen oder unteren) Oberfläche der Schneidkante, bestimmt.

Die axiale Richtung ist eine zur Rotationsebene des Messers senkrechte Richtung. Die Nabe ist im Sinne der vorliegenden Erfindung derjenige Bereich der Klinge, welcher zum einen die Welle in einer Aufnahme aufnimmt, also beispielsweise eine für das Einsetzen und Befestigen der Welle geeignete Öffnung bzw. Befestigungsmöglichkeit aufweist, und zum anderen der die Aufnahme unmittelbar umgebende Bereich, welcher für die strukturelle Festigkeit der Anbindung von Welle zu Klinge/Messer notwendig ist. Dieser Bereich ist bei den bekannten Klingen zumeist eine kreisförmige Fläche, aus welcher sich dann das oder die Messer im Wesentlichen radial erstrecken, kann aber gemäß der vorliegenden Erfindung auch von der Kreisform abweichende Geometrien aufweisen.

Durch diese Klingenanordnung wird die Funktionalität der Klinge auf sehr vorteilhafte Weise erweitert, und insbesondere werden die Wirkungen der erfindungsgemäßen Verschiebbarkeit des Schneidmessers verbessert. Neben dem Schneiden mit den scharfen Schneidkanten des Messers der Klinge in Umfangsrichtung ist auch eine effektive Fräsfunktionalität der Fräsrippe in Drückrichtung gegeben. Diese wiederrum ermöglicht es dem Messer, feste Speisen besser und schneller zu schneiden. Die Wirkung der erfindungsgemäßen Klingenanordnung beruht darauf, dass feste Speisen nunmehr durch leichten Druck und Rotation weggefräst werden können und sich dadurch die Schneidzonen der Messer weiter in die Speise verschieben können. Dies wird dadurch ermöglicht, dass die neuartige Anordnung der Fräsrippe die "passive" Mittelzone so klein wie möglich macht. Selbst bei Klingen mit nur einseitig verlaufender Fräsrippe (das heißt einer nur auf einem Messer vorgesehenen Fräsrippe) verbleibt aufgrund der Erstreckung der Fräsrippe von der Nabe zur Schneidkante nur noch eine sehr kleine, die Aufnahme der Welle umgebende passive Zone, deren Wirkungsbereich eine Kreisfläche mit einem äußerst kleinen Durchmesser ist. Die zum Eindringen in die Speise notwendige Druckkraft ist daher ebenfalls entsprechend gering.

Gemäß einer besonders bevorzugten Ausführungsform erstreckt sich die Fräsrippe von einer Position am Rand der Nabe, die in Bezug auf die Drehmitte im Wesentlichen unter einem Winkel von bevorzugt 45° zur radialen Mittelachse des Messers liegt, bis zur Schneidkante. Die Fräsrippe wirkt somit als Verlängerung der Schneidkante. Dadurch, dass die Fräsrippe an einer um 45° von der Erstreckung des Klingenmessers rotierten Position beginnt und sich dann entlang des Randes der Nabe und der Vorderkante des Messers zur Schneidkante erstreckt, nimmt der Schlagwinkel entlang der Fräsrippe von fast 90° am inneren Ende der Rippe nach außen hin ab und fällt unter 45° bevor die Fräsrippe die Schneidkante erreicht, wodurch die Fräswirkung im Vergleich zur radial orientierten Rippe mit im Wesentlichen 0° Schlagwinkel zwar etwas geringer ausfällt, jedoch die Gefahr des Mitrotierens der Speisen eliminiert wird. So kann ein effektives Fräsen der Speise gewährleistet werden. Außerdem werden Bereiche (z.B. Ecken oder kleine wenige Millimeter große Spalten zwischen Fräskante und Schneidkante) vermieden, an denen sich Nahrungsmittelreste sammeln können, und somit wird die Reinigung der Klinge vereinfacht. Schließlich können durch die exzentrische Anordnung der Fräskante relativ zur Drehmitte größere Nahrungsmittelstückchen nach außen in die Schneidzone transportiert werden, wo sie effektiver geschnitten werden können.

In einer besonders bevorzugten Ausführungsform der Klingenanordnung ist die Fräsrippe an der in Rotationsrichtung hinteren Seite des Messers angeordnet. Dies hat fertigungstechnische Vorteile, da die Fräskante an einer Seite des das Messer bildenden Blechrohlings hochgebogen wird, die von der Seite der Schneidkante entfernt ist und der entsprechende Bereich durch das Hochbiegen somit nicht beeinträchtigt wird. Auch hier lassen sich Ecken vermeiden, in denen sich Nahrungsmittelreste sammeln könnten, und die Klingenanordnung kann leicht gereinigt werden. Des Weiteren kann durch die räumlich getrennte Ausgestaltung die Fräsrippe als umgebogene Blechzunge bei der Herstellung separat von der Schneidkante geschliffen werden. Die exzentrische Anordnung der Fräsrippe schließlich erlaubt auch in diesem Fall den Transport größerer Nahrungsmittelstückchen nach außen.

### Kurze Beschreibung der Figuren

Figur 1a) ist eine Seitenansicht und Figur 1b) eine Längsschnittansicht des Schaftes des erfindungsgemäßen Arbeitsgeräts,
Figur 2 ist eine vergrößerte Schnittansicht der Lagerbaugruppe des Schaftes der Figuren 1a) und 1b),
Figur 3a) ist eine perspektivische Detailansicht einer Rollung zur axialen Sicherung der Welle und Fig. 3b) ist eine Schnittansicht der Verbindung von Rollung und U-Scheibe an der Welle,
Figuren 4a) und 4b) sind perspektivische Detailansichten zweier Ausführungsformen des oberen Teils der inneren Baugruppe des Schafts der Figuren 1a) und 1b),
Figuren 5a) und 5b) sind Schnittansichten des Schafts des erfindungsgemäßen Arbeitsgeräts mit der Klinge in der oberen bzw. unteren Position,
Figuren 6a) und 6b) zeigen eine perspektivische Ansicht sowie eine Draufsicht von unten einer Klingenanordnung mit einer in der Verlängerung der Schneidkante zur Nabe verlaufenden Fräsrippe gemäß einer weiteren Ausführungsform der Erfindung; und
Fig. 7a), 7b) und 7c) zeigen eine perspektivische Ansicht, eine Draufsicht von unten sowie eine Seitenansicht einer alternativen Klingenanordnung mit einer einseitigen, der Schneidkante auf der Klinge gegenüberliegenden Fräsrippe, gemäß einer weiteren Ausführungsform der Erfindung.

### Detaillierte Beschreibung

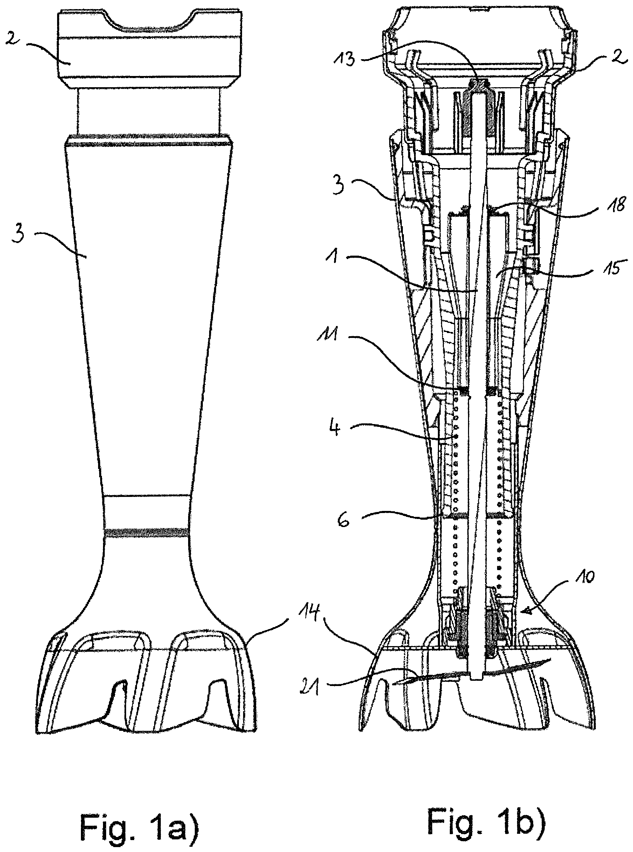

In Figur 1a) ist eine Seitenansicht des Schafts eines erfindungsgemäßen Arbeitsgeräts, in diesem Beispiel eines Stabmixers dargestellt. Der Schaft ist in eine innere Baugruppe 2 und in eine äußere Baugruppe 3 unterteilt. Die innere Baugruppe 2 kann sich dabei teleskopartig in die äußere Baugruppe 3 hinein und aus ihr hinaus bewegen. Wie in der Längsschnittansicht des Schafts in Figur 1b) zu erkennen ist, wird die Welle 1 in der inneren Baugruppe 2 geführt und über ein Axiallager 11 in dieser gelagert. Die innere Baugruppe 2 ist darüber hinaus so ausgestaltet, dass sie mit dem hier nicht gezeigten Motorgehäuse des Stabmixers, der gleichzeitig den Griff für den Benutzer darstellt, lösbar gekoppelt werden kann, wobei im gekoppelten Zustand keine Relativbewegung zwischen Motorgehäuse und innerer Schaftbaugruppe 2 erlaubt wird. Dabei wird auch die Welle 1 über die Wellenkupplung 13 mit der Motorwelle verbunden.

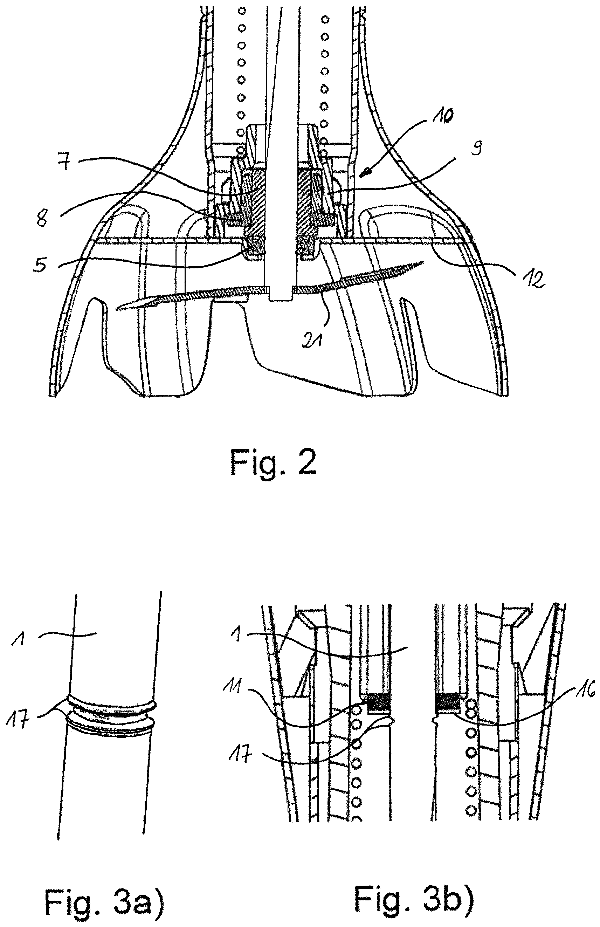

Am unteren Ende der äußeren Baugruppe 3 befindet sich eine glockenförmige Abschirmung 14 für das am unteren Ende der Welle 1 befestigte Schneidmesser 21 (Arbeitsteil), das von der Abschirmung (Glocke) 14 bevorzugt vollständig umschlossen wird. Die Abschirmung weist innen eine Abdeckplatte 12 auf, die mit der Abschirmung 14 einen gegenüber der äußeren Baugruppe 3 abgedichteten Bearbeitungsraum definiert. Des Weiteren befindet sich in der äußeren Baugruppe ein Radialgleitlager 7 in unmittelbarer Nähe zum Messer 21, da hier der Momenteintrag am größten ist. Hier ist das Radialgleitlager 7 an der Abdeckplatte 12 der Abschirmung 14 vorgesehen, da diese Komponente dem Messer 21 am nächsten liegt. Das Radialgleitlager 7 ist in einer flexiblen Bundbuchse 8 gelagert, die von einer Lagerhülse 9 umgeben ist, welche die Buchse 8 und das Radialgleitlager 7 an der Abdeckplatte 12 fixiert. Radialgleitlager 7, Bundbuchse 8 und Lagerhülse 9 bilden eine Lagerbaugruppe 10 (siehe Figur 2). Die flexible Bundbuchse 8 lässt eine geringe Rotation des Radialgleitlagers 7 um einen imaginären Drehpunkt im Zentrum zu. Wird das hier nicht gezeigte Motorteil auf den Schaft aufgesteckt, wird die Welle 1 im oberen Bereich über die Wellenkupplung koaxial zur Motorwelle gezwungen. Aufgrund von fertigungsbedingten Toleranzen oder bei Exzentrizität des Motors zu der Adaption würde sich eine "fest" eingespannte Welle ohne flexible Bundbuchse leicht verbiegen. Dies würde wiederum im Betrieb zu einem höheren Verschleiß des Lagers und einer erhöhten Geräuschentwicklung führen. Die "weiche" Lagerung mithilfe der flexiblen Bundbuchse 8 schafft hier Abhilfe und die Lagerbaugruppe 10 mit Bundbuchse 8 ist somit in der Lage, die in der Fertigung üblichen Toleranzen oder die durch einen exzentrisch angekoppelten Motor bedingten Kräfte auszugleichen.

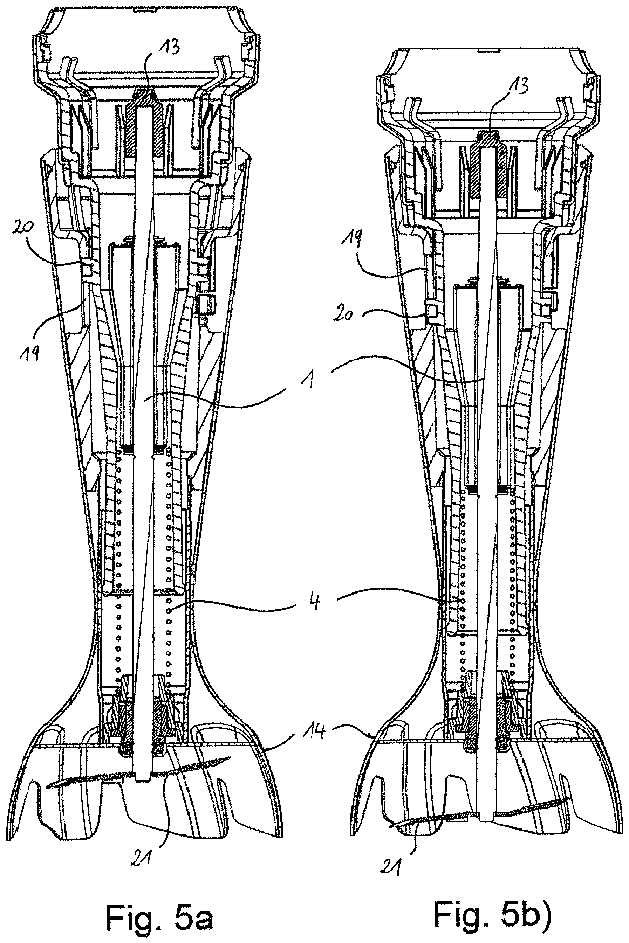

Eine innen in der inneren Baugruppe 2 liegende Feder 4 stützt sich unten über eine Lagerbaugruppe 10 mit dem Radialgleitlager 7 an der äußeren Baugruppe 3 ab (Fig. 2) und liegt oben an der Innenseite der inneren Baugruppe 2 an, so dass sie die beiden Baugruppen in eine Vorzugslage zwingt, bei der die innere Baugruppe 2 aus der äußeren Baugruppe 3 oben herausgedrückt wird und so das Schneidmesser 21 in seine oberste Position im Bearbeitungsraum bringt (siehe auch Fig. 5a). Die Lagerbaugruppe 10 wird dabei durch die auf die Lagerhülse 9 drückende Feder 4 in Position gehalten. Die Endanschläge für diesen Hub sind an der Innenseite der äußeren Baugruppe 3 in Form von vier über den Umfang verteilten Längsnuten 19 (Längsführungen) angebracht. In diesen laufen auf der Außenseite der inneren Baugruppe 2 entsprechend angebrachte Rippen 20 (Führungselemente). Die vier Rippen 20, von denen in den Fig. 5a) und 5b) jeweils zwei sichtbar sind, erfüllen zwei Funktionen und sind in zwei gegenüberliegende Pärchen aufgeteilt. Das eine Pärchen bestimmt die Endposition der inneren Baugruppe 2 in der durch die Feder 4 aufgezwungenen Vorzugslage und dient zudem dem einmaligen Hinterrasten bei der Montage der Baugruppe. Das zweite Rippenpärchen verhindert das Verdrehen der inneren Baugruppe relativ zur äußeren Baugruppen ("Misuse"). In einer hier nicht gezeigten Alternative sind nur zwei Längsnuten an der Innenseite der äußeren Baugruppe und entsprechend zwei Rippen an der Außenseite der inneren Baugruppe vorgesehen, wobei eine Kombination Längsnut-Rippe die axiale Endposition der inneren Baugruppe bestimmt und die andere Kombination Längsnut-Rippe das gegenseitige Verdrehen der beiden Baugruppen verhindert.

Da die Anforderungen an die Koaxialität der Wellenkupplung hoch sind, sind im oberen Bereich der inneren Baugruppe 2 Zentrierrippen 15 als Zentriermittel angebracht, welche die Welle radial in einem schmalen Intervall "vorzentrieren". Dies ist sinnvoll um das "Einfädeln" der hier nicht gezeigten Wellenkupplung am Motorgehäuse auf der Wellenkupplung 13 des Schafts zu erleichtern. Aus Gründen der Funktionsintegration bilden diese Zentrierrippen 15 auch die Anlagefläche des Axiallagers 11. Die Kraftübertragung vom Axiallager 11 auf die Welle 1 wird über eine U-Scheibe 16 und eine Rollung auf der Welle 1 bewerkstelligt (siehe Figuren 3a und 3b), die somit eine axiale Sicherung der Welle unterhalb des Lagers darstellen. Die Rollung resultiert in einer Einschnürung auf der Welle sowie in jeweils einem Wulst 17 vor und nach der Einschnürung verdrängtem Material, das über den Wellendurchmesser ragt. Somit passt es nicht mehr durch die relativ eng anliegende U-Scheibe. Durch eine weitere Sicherungsscheibe 18 auf der Welle 1 oberhalb der Zentrierrippen 15 der inneren Baugruppe 2 wird die Welle 1 in der inneren Baugruppe 2 zusätzlich axial fixiert. Die äußere Baugruppe 3 verfügt des Weiteren auch über eine Wellendichtung 5 (Fig. 2), um die Verschmutzung über die Wellenbenetzung zu reduzieren.

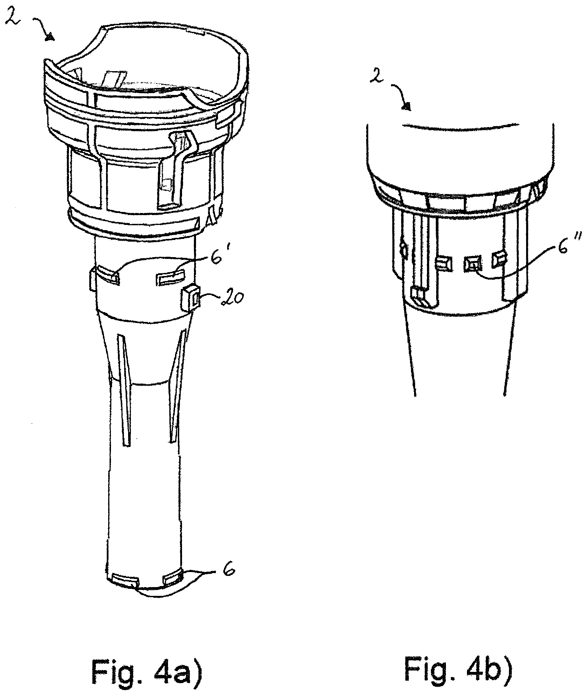

Die zur gegenseitigen axialen Verschiebung notwendige Lagerung der beiden Baugruppen 2 bzw. 3 erfolgt an zwei Stellen über Gleitlager 6, 6' einfacher Geometrie, wobei die am unteren Ende der inneren Baugruppe 2 vorgesehene Gleitlagerhälfte zum Beispiel durch eine den Umfang teilweise überragende Aufweitung 6 und die gegenüberliegende Gleitlagerhälfte durch eine an der Innenseite der äußeren Baugruppe 3 befestigte zylindrische Gleithülse dargestellt wird. Am oberen Ende der inneren Baugruppe 2 können hingegen über den Umfang in verteilte Vorsprünge 6' vorgesehen sein , die sich gegen eine glatte Lagerfläche an der Innensite des oberen Teils der äußeren Baugruppe 3 abstützt. Zwei unterschiedliche Ausführungen dieser Gleitlagervorsprünge 6' und 6" ist in Figuren 4a) und 4b) gezeigt. Eine mögliche Gleitpaarung erfolgt hierbei zwischen zwei unterschiedlichen Kunststoffen, die andere mögliche Gleitpaarung zwischen Kunststoff und Metall (z.B. Edelstahl). Die Lagerstellen 6, 6' (6, 6") sind so weit auseinander angebracht wie es der Bauraum zulässt, um eine Selbsthemmung im Gebrauch zu verhindern.

Bei dem oben beschriebenen Aufbau wird zum einen die Position des Schneidmessers 21 in der Ausgangslage im Vergleich zu der üblichen Position nach oben (vom Behälterboden weg) verlagert (Fig. 5a), um den Sog auf den Behälterboden zu verringern, und zum anderen lässt der Schaft durch die Zweiteilung eine axiale Bewegung des Messers 21 Richtung Behälterboden gegen die Kraft der Feder 4 zu. Drückt der Bediener während des Betriebs axial auf das gleichzeitig als Griff dienende Motorgehäuse, das mit der inneren Baugruppe 2 verbunden ist, ist der monierte Schaft in der Lage, diesen Weg durch die innere Baugruppe 2 über die axial unbeweglich in ihr gelagerte Welle 1 auf das Messer zu übertragen. Die äußere Geometrie der äußeren Baugruppe 3 kann dabei unverändert bleiben. Dazu taucht die innere Baugruppe 2 einen gewissen Weg in die äußere Baugruppe 3 ein (Fig. 5b), bis die innere Baugruppe 2 dort an einen definierten, durch das Zusammenwirken von Längsnuten 19 und Rippen 20 gebildeten Anschlag kommt. Somit kann in der Vorzugslage, bei der kein Druck vom Benutzer auf den Schaft ausgeübt wird und das Messer 21 sich in der obersten Position im Bearbeitungsbereich in der Abschirmung 14 befindet (Fig. 5a), der Sog massiv verringert werden und gleichzeitig durch den axial möglichen Hub der Arbeitsbereich des Messers 21 nach unten vergrößert werden, um beispielsweise an schwer erreichbare Speisestücke zu gelangen.

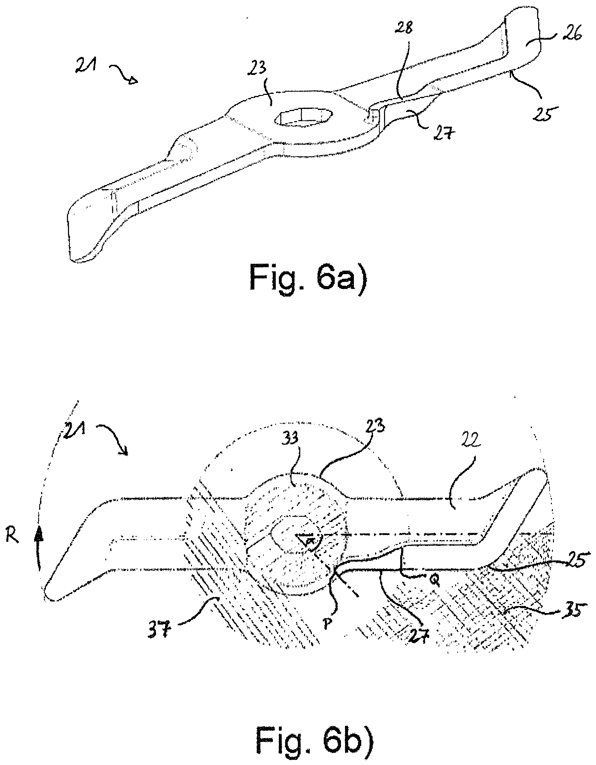

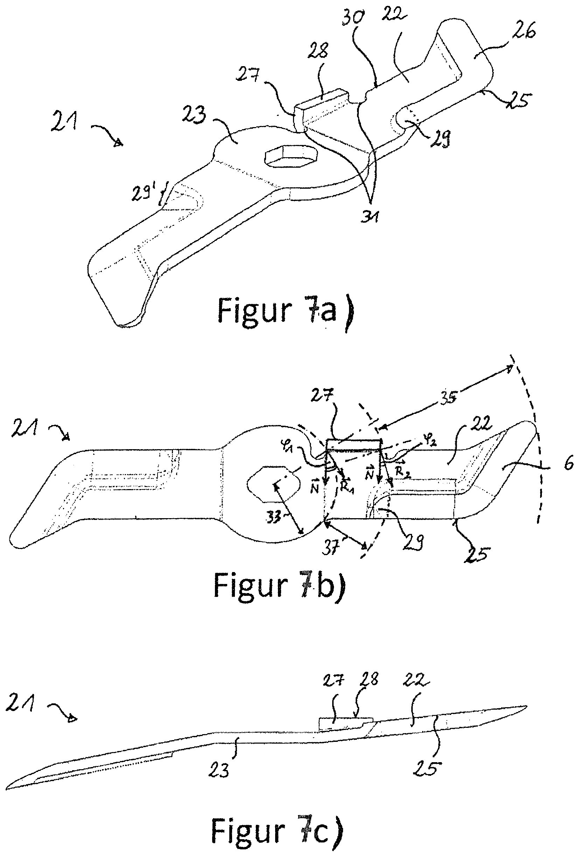

In Figuren 6 und 7 ist im Detail die Klingenanordnung 21 gezeigt, die am (unteren) Arbeitsende der Welle 1 des Stabmixers befestigt ist und aus zwei sich entgegengesetzt erstreckenden Messern 22, 22' besteht. Die erfindungsgemäße Klingenanordnung umfasst eine Klinge 21 mit zwei diagonal gegenüberliegenden Messern 22, 22', von denen jedes eine mit einem Keilwinkel von 20° geschliffene Schneidkante 25 besitzt. Die Messer 22, 22' sind dabei aus der Rotationsebene hinaus abgewinkelt, das Messer 22 nach unten und Messer 22' nach oben, wobei anzumerken ist, dass die Positionsangaben auf die Messer im Betriebszustand bezogen sind, die im Vergleich zu den Figuren 6 und 7 "auf den Kopf" gestellt sind. Auf dem in der Figur 6a rechten Messer 22 ist die im Betrieb nach unten und in der Figur nach oben gewandte Schleiffläche 26 sichtbar, während die Schleiffläche des linken Messers 22 nach oben gewandt (in der Figur nach unten gewandt) und daher in dieser Draufsicht von unten nicht sichtbar ist. In der Mitte der Klingenanordnung 21 befindet sich die Nabe 23, in deren mittiger Bohrung die axiale Welle 1 befestigt wird, welche ihre vom Motor des Stabmixers erzeugte Drehung auf die Klingenanordnung überträgt. Die Klingenanordnung 21 selbst ist beispielsweise aus einem 2mm dicken Blech hergestellt, und in der Regel aus Metall. Aber auch Keramik kommt als Material für eine derartige Klinge in Frage.

Gemäß einer bevorzugten Ausführungsform ist am Messer 22 eine Fräsrippe 27 vorgesehen. Die axial vorstehende Fräsrippe 27 ist dabei in der Verlängerung der Schneidkante 25 angeordnet, wobei sie an einer von der Erstreckung des Messers 22 um α = 45° gedrehten Position P beginnt und zunächst im Wesentlichen tangential entlang des Randes der Nabe 23 (des die Nabe bildenden Blechs) und dann entlang der Vorderkante des Messers 22 bis zum inneren Ende der Schneidkante 25 verläuft. Diese Ausrichtung der Fräsrippe 27 hat zur Folge, dass der Schlagwinkel an der Position P fast 90° beträgt (Normale auf die "vorwärts" gewandte Fläche der Fräsrippe ist senkrecht zur Drehrichtung) und dann bis zum Punkt Q am inneren Ende der Schneidkante auf etwa 20° abnimmt.

Die axial gewandte Schleiffläche 28 der Fräsrippe 27 und die axial gewandte Schleiffläche 26 der Schneidkante 25 bilden zusammen eine Gesamtschleiffläche, deren Minimierung ebenso wie die Minimierung der passiven Mittelzone dazu beiträgt, die für das Eindringen in die Speise notwendige Kraft möglichst gering zu halten. Die Fräsrippe 27 kann dabei aus dem Klingenblech heraus abgewinkelt sein oder wie gezeigt direkt herausgestanzt und überschliffen sein, was in beiden Fällen aufgrund der geringen Blechdicke (ca. 2mm) des zur Herstellung des Messers 22 verwendeten Blechs eine nur sehr geringe Schleiffläche 28 und somit einen sehr geringen Beitrag zur Gesamtschleiffläche bedeutet.

Wie in der hier dargestellten Ausführungsform gezeigt ist, geht die Oberfläche der Schneidkante 25 (die mit der Rotationsebene/Schleiffläche 26 den Keilwinkel, bevorzugt 20° bildet) kontinuierlich in die Fräsrippe 27 über, das heißt der Keilwinkel im Bereich des Übergangs von der Schneidzone 35 zur Fräszone 37 wächst kontinuierlich vom Keilwinkel des Messers 22, hier 20°, bis auf einen Winkel von 90° an, unter welchem die Fräsrippe 27 aus der Rotationsebene des Messers 22 emporsteht (siehe die in Drehrichtung gewandte senkrechte Stirnfläche der Fräsrippe 27 in Figur 6a). Gleichzeitig kann sich die Breite der Schleiffläche 26 der Schneidkante 25 in der Rotationsebene beim genannten Übergang auf eine der Blechdicke entsprechende Breite verringern, was einer Minimierung der Gesamtschleiffläche zu Gute kommt.

In den Fig. 7a) bis 7c) ist eine besonders bevorzugte Ausführungsform der Klingenanordnung 21 gezeigt, bei welcher die Fräsrippe 27 an der zur Schneidkante 25 gegenüberliegenden Kante 30 axial emporsteht. Die Fräsrippe 27 liegt also an der in Rotationsrichtung hinteren Seite der Klinge 22. Der Schlagwinkel der Fräsrippe 27 ist, da sie nicht entlang eines Radius verläuft, variabel und beträgt am inneren Ende der Rippe ϕ₁ = 30° (Winkel zwischen der Normalen auf die Fräskante *̅N̅*̅, und der Rotationsrichtung *̅R̅*̅₁), während er am äußeren Ende auf ϕ₂ = 15° abnimmt. Die Wahl dieser Winkel vereint eine gute Fräsleistung mit einem akzeptablen Drehwiderstand, welcher insbesondere bei festeren Speisen nicht zu hoch werden darf. Die Schleiffläche 8 ist hier, wie in der Seitenansicht der Figur 7c) zu erkennen ist, horizontal, d.h. erstreckt sich parallel zur Rotationsebene der Klingenanordnung, während die beiden Messer 2 und 2' der Klingenanordnung jeweils nach unten bzw. oben gegenüber dem Nabenabschnitt 3 abgewinkelt sind (N.B.: in der Figur "über Kopf" dargestellt).

Die Fräsrippe 27 wird, wie in der Draufsicht der Fig. 7b) gut erkennbar ist, an der Klinge innen und außen von Einkerbungen 31 umgeben, welche vom Stanzwerkzeug bei der Herstellung erzeugt werden und beim Emporbiegen der Fräsrippe ein Einreißen aufgrund zu kleiner Biegeradien oder ein Verbiegen des Messers 2 verhindern. Weiterhin ist gut die Aufteilung in Zonen ersichtlich, wobei die radial außen liegende Schneidzone 35 durch den Umlauf der Schneidkante 25 definiert wird. An die unveränderte Schneidkante 25 (das heißt solange der Keilwinkel im Wesentlichen konstant ist) schließt sich ein Übergangsbereich 29 an, an dem sich der Keilwinkel von den beispielsweise 20° der Schneidkante erhöht. Da dieser Bereich aufgrund des rasch auf 90° ansteigenden Keilwinkels keine Schneidwirkung entfaltet, erstreckt sich die Schneidzone 35 wie in Fig. 7b) gezeigt nur bis zur Grenze zwischen Schneidkante 25 und Übergangsbereich 29. Der Anstieg des Keilwinkels ist auch gut an dem in Fig. 7a sichtbaren Übergangsbereich 29' am anderen Messer 22' sichtbar. Die durch den Umlauf der Fräsrippe 27 gebildete Fräszone 37 hingegen grenzt unmittelbar an die Schneidzone 35 an, ohne diese zu überlappen. Nach innen schließt sich an die Fräszone 37 noch die passive Mittelzone 33 an, die hier vollständig von der Nabe 23 definiert wird.

## Patentansprüche

1. Arbeitsgerät zum Rühren oder Zerkleinern von Nahrungsmitteln, umfassend:
einen in einem Motorgehäuse angeordneten Antriebsmotor,
einen Schaft, in welchem eine mit dem Antriebsmotor drehstarr verbindbare Welle (1) gelagert ist und der in eine innere und äußere Baugruppe (2, 3) unterteilt ist, wobei die äußere Baugruppe (3) am vom Motorgehäuse entfernten Ende eine Abschirmung (14) aufweist, und
ein von der Abschirmung (14) umgebenes Arbeitsteil,
wobei die Welle (1) in der inneren Baugruppe (2) axial unbeweglich geführt wird und die innere Baugruppe (2) gegenüber der äußeren Baugruppe (3) axial beweglich ist,
wobei das Arbeitsteil fest mit der Welle (1) verbunden ist und axial unverschieblich in der inneren Baugruppe (2) gelagert ist, so dass das Arbeitsteil in Bezug auf die Abschirmung (14) beweglich ist,
**dadurch gekennzeichnet, dass** zwischen der inneren und der äußeren Baugruppe (2, 3) ein elastisches Element (4) vorgesehen ist, das die äußere Baugruppe (3) gegenüber der inneren Baugruppe (2) axial vorspannt.

2. Arbeitsgerät nach Anspruch 1, wobei die Welle (1) über ein Axiallager (11) in der inneren Baugruppe (2) gelagert ist und die Kraftübertragung vom Axiallager (11) auf die Welle (1) über eine an der Welle (1) angebrachte Sicherung (16, 17) erfolgt.

3. Arbeitsgerät nach Anspruch 1 oder 2, wobei die äußere Baugruppe (3) am ihrem vom Motorgehäuse entfernten Ende ein radiales Gleitlager (7) für die Welle (1) aufweist.

4. Arbeitsgerät nach Anspruch 3, wobei das radiale Gleitlager (7) in einer flexiblen Buchse (8) gegenüber der äußeren Baugruppe (3) abgestützt ist.

5. Arbeitsgerät nach einem der vorangehenden Ansprüche, wobei an der äußeren Baugruppe (3) Längsführungen (19) vorgesehen sind, welche mit entsprechenden an der inneren Baugruppe (2) vorgesehenen Führungselementen (20) zusammenwirken.

6. Arbeitsgerät nach Anspruch 5, wobei die Längsführungen (19) und Führungselemente (20) jeweils paarweise gegenüberliegend vorgesehen sind.

7. Arbeitsgerät nach einem der vorangehenden Ansprüche, wobei an der inneren Baugruppe (2) Zentriermittel für die Welle (1) vorgesehen sind.

8. Arbeitsgerät nach einem der vorangehenden Ansprüche, wobei die Welle (1) durch ein in der inneren Baugruppe (2) befestigtes weiteres Sicherungselement (18) axial fixiert ist.

9. Arbeitsgerät nach einem der vorangehenden Ansprüche, wobei die innere Baugruppe (2) gegenüber der äußeren Baugruppe (3) durch ein Gleitlager (6, 6') gelagert ist.

10. Arbeitsgerät nach Anspruch 9, wobei das Gleitlager (6, 6') aus zwei Gleitlagerschalen besteht, die jeweils aus unterschiedlichen Kunststoffen oder Kunststoff einerseits und Metall andererseits bestehen.

11. Arbeitsgerät nach einem der vorangehenden Ansprüche, wobei die innere Baugruppe (2) axial unbeweglich mit dem Motorgehäuse verbindbar ist.

12. Arbeitsgerät nach einem der vorangehenden Ansprüche, umfassend eine am Arbeitsende der Welle (1) befestigte, sich radial erstreckende drehbare Klinge (21) mit einer an der Drehmitte der Klinge (21) liegenden Nabe (23) zur Aufnahme der Welle (1), wobei die Klinge (21) zumindest ein sich radial erstreckendes Messer (22) aufweist, welches eine an einer in Rotationsrichtung vorderen Seite liegende und im Umlauf eine kreisförmige Schneidzone (35) definierende Schneidkante (25) besitzt,
und wobei die Klinge (21) eine Fräsrippe (27) aufweist, die in einer axialen Richtung aus der Klinge (21) emporsteht und so orientiert ist, dass sie im Umlauf eine Fräswirkung erzeugt und eine entsprechende Fräszone (37) definiert, die sich von der Nabe (23) bis zur Schneidzone (35) des Messers (22) erstreckt.

13. Arbeitsgerät nach Anspruch 12, wobei sich die Fräsrippe (27) von einer Position am Rand der Nabe (23), die in Bezug auf die Drehmitte unter einem Winkel (α) von bevorzugt 45° zur radialen Mittelachse des Messers (22, 22') liegt, bis zur Schneidkante (25) erstreckt.

14. Arbeitsgerät nach Anspruch 12, wobei die Fräsrippe (27) an der in Rotationsrichtung hinteren Seite des Messers (22) angeordnet ist.

## Claims

1. Implement for stirring or chopping foodstuffs, comprising:
a drive motor arranged in a motor housing,
a shank, in which a shaft (1) that can be connected to the drive motor for conjoint rotation therewith is mounted and which shank is divided into an inner and outer assembly (2, 3), wherein the outer assembly (3) comprises a shield (14) on the end remote from the motor housing, and
a working part surrounded by the shield (14),
wherein the shaft (1) is guided in the inner assembly (2) in an axially immovable manner and the inner assembly (2) is axially movable relative to the outer assembly (3),
wherein the working part is rigidly connected to the shaft (1) and mounted in the inner assembly (2) so as to be axially non-displaceable such that the working part is movable relative to the shield (14),
**characterised in that** a resilient element (4) that axially preloads the outer assembly (3) relative to the inner assembly (2) is provided between the inner and the outer assembly (2, 3).

2. Implement according to claim 1, wherein the shaft (1) is mounted in the inner assembly (2) via an axial bearing (11) and the transfer of force from the axial bearing (11) to the shaft (1) takes place via a locking device (16, 17) attached to the shaft (1).

3. Implement according to claim 1 or 2, wherein the outer assembly (3) comprises, on the end thereof that is remote from the motor housing, a radial sliding bearing (7) for the shaft (1).

4. Implement according to claim 3, wherein the radial sliding bearing (7) is supported relative to the outer assembly (3) in a flexible bushing (8).

5. Implement according to any of the preceding claims, wherein longitudinal guides (19) are provided on the outer assembly (3), which cooperate with corresponding guide elements (20) provided on the inner assembly (2).

6. Implement according to claim 5, wherein the longitudinal guides (19) and guide elements (20) are in each case provided in pairs opposite one another.

7. Implement according to any of the preceding claims, wherein centring means for the shaft (1) are provided on the inner assembly (2).

8. Implement according to any of the preceding claims, wherein the shaft (1) is axially secured by means of another locking element (18) fastened in the inner assembly (2).

9. Implement according to any of the preceding claims, wherein the inner assembly (2) is mounted relative to the outer assembly (3) by means of a sliding bearing (6, 6').

10. Implement according to claim 9, wherein the sliding bearing (6, 6') consists of two sliding bearing shells, which each consist of different plastics materials or one consists of plastics material and the other consists of metal.

11. Implement according to any of the preceding claims, wherein the inner assembly (2) can be connected to the motor housing so as to be an axially immovable.

12. Implement according to any of the preceding claims, comprising a radially extending rotatable blade (21) that is fastened on the working end of the shaft (1) and that comprises a hub (23) for receiving the shaft (1) at the centre of rotation of the blade (21), wherein the blade (21) comprises at least one radially extending knife (22), which has a cutting edge (25) that is on a front side in the direction of rotation and that defines a circular cutting zone (35) when revolving,
and wherein the blade (21) comprises a milling rib (27), which projects upwards from the blade (21) in an axial direction and is oriented such that it generates a milling effect when revolving and defines a corresponding milling zone (37) that extends from the hub (23) to the cutting zone (35) of the knife (22).

13. Implement according to claim 12, wherein the milling rib (27) extends to the cutting edge (25) from a position on the edge of the hub (23) that is at an angle (α) relative to the centre of rotation of preferably 45° to the radial central axis of the knife (22, 22').

14. Implement according to claim 12, wherein the milling rib (27) is arranged on the rear side of the knife (22) in the direction of rotation.

## Revendications

1. Appareil pour agiter ou broyer des aliments, comprenant :
un moteur d'entraînement disposé dans un boîtier de moteur,
une tige dans laquelle est monté un arbre (1) pouvant être relié de façon solidaire en rotation au moteur d'entraînement et qui est subdivisée en un module intérieur et extérieur (2, 3), dans lequel le module extérieur (3) présente au niveau de l'extrémité éloignée du boîtier de moteur, un blindage (14), et
une partie fonctionnelle entourée par le blindage (14),
dans lequel l'arbre (1) dans le module intérieur (2) est conduit de façon axialement immobile et le module intérieur (2) est axialement mobile par rapport au module extérieur (3),
dans lequel la partie fonctionnelle est reliée fixement à l'arbre (1) et est montée dans le module intérieur (2) de façon non déplaçable axialement de sorte que la partie fonctionnelle est mobile par rapport au blindage (14),
**caractérisé en ce que**, entre le module intérieur et le module extérieur (2, 3) est prévu un élément élastique (4) qui précontraint le module extérieur (3) par rapport au module intérieur (2).

2. Appareil selon la revendication 1, dans lequel l'arbre (1) est monté sur un palier axial (11) dans le module intérieur (2) et la transmission de force du palier axial (11) à l'arbre (1) s'effectue par une sécurité (16, 17) appliquée sur l'arbre (1).

3. Appareil selon la revendication 1 ou 2, dans lequel le module extérieur (3) présente au niveau de son extrémité éloignée du boîtier de moteur un palier coulissant radial (7) pour l'arbre (1).

4. Appareil selon la revendication 3, dans lequel le palier coulissant radial (7) est soutenu dans une bague flexible (8) par rapport au module extérieur (3).

5. Appareil selon l'une quelconque des revendications précédentes, dans lequel au niveau du module extérieur (3) sont prévus des guidages longitudinaux (19) qui interagissent avec des éléments de guidage correspondants (20) prévus au niveau du module intérieur (2).

6. Appareil selon la revendication 5, dans lequel les guidages longitudinaux (19) et les éléments de guidage (20) sont prévus respectivement en opposition par paire.

7. Appareil selon l'une quelconque des revendications précédentes, dans lequel au niveau du module intérieur (2) des moyens de centrage de l'arbre (1) sont prévus.

8. Appareil selon l'une quelconque des revendications précédentes, dans lequel l'arbre (1) est fixé axialement par un autre élément de sécurité (18) fixé dans le module intérieur (2).

9. Appareil selon l'une quelconque des revendications précédentes, dans lequel le module intérieur (2) est monté par rapport au module extérieur (3) par le biais d'un palier coulissant (6, 6').

10. Appareil selon la revendication 9, dans lequel le palier coulissant (6, 6') est constitué de deux coussinets de palier lisses qui sont constitués respectivement de matières plastiques différentes ou de matière plastique d'une part et de métal d'autre part.

11. Appareil selon l'une quelconque des revendications précédentes, dans lequel le module intérieur (2) peut être relié de façon axialement immobile.

12. Appareil selon l'une quelconque des revendications précédentes, comprenant une lame (21) rotative fixée au niveau de l'extrémité fonctionnelle de l'arbre (1), s'étendant radialement avec un moyeu (23) situé au niveau du centre de rotation de la lame (21), pour recevoir l'arbre (1), dans lequel la lame (21) présente au moins un couteau (22) s'étendant radialement, lequel possède un bord de coupe (25) se trouvant au niveau d'un côté avant dans le sens de rotation et définissant en mouvement une zone de coupe circulaire (35),
et dans lequel la lame (21) présente une nervure de fraisage (27) déviant de la lame (21) vers le haut dans une direction axiale et est orientée de telle sorte qu'elle génère en mouvement une action de fraisage et définit une zone de fraisage (37) correspondante qui s'étend du moyeu (23) à la zone de coupe (35) du couteau (22).

13. Appareil selon la revendication 12, dans lequel la rainure de fraisage (27) s'étend d'une position située sur le bord du moyeu (23) qui se trouve par rapport au centre de rotation selon un angle (α) de préférence de 45° par rapport à l'axe médian radial du couteau (22, 22') jusqu'au bord de coupe (25).

14. Appareil selon la revendication 12, dans lequel la rainure de fraisage (27) est disposée au niveau du côté arrière du couteau (22) dans le sens de rotation.
